Europäisches Patentamt

European Patent Office

Office européen des brevets

(11) Veröffentlichungsnummer: **0 354 398 B1**

# (12) EUROPÄISCHE PATENTSCHRIFT

(45) Veröffentlichungstag der Patentschrift: **11.05.94**

(21) Anmeldenummer: **89113508.9**

(22) Anmeldetag: **22.07.89**

(51) Int. Cl.⁵: **G11B 5/706**, B22F 1/00, C22C 33/02

(54) **Nadelförmige Legierungspulver auf Eisenbasis, Verfahren zu ihrer Herstellung sowie deren Verwendung.**

(30) Priorität: **06.08.88 DE 3826770**

(43) Veröffentlichungstag der Anmeldung:
**14.02.90 Patentblatt 90/07**

(45) Bekanntmachung des Hinweises auf die Patenterteilung:
**11.05.94 Patentblatt 94/19**

(84) Benannte Vertragsstaaten:
**DE FR GB IT NL**

(56) Entgegenhaltungen:
**US-A- 4 063 000**
**US-A- 4 069 073**

(73) Patentinhaber: **BAYER AG**

**D-51368 Leverkusen(DE)**

(72) Erfinder: **Naumann, Rolf, Dr.**
**Scheiblerstrasse 89**
**D-4150 Krefeld 1(DE)**
Erfinder: **Rademachers, Jakob, Dr.**
**Hoeninghausstrasse 34**
**D-4150 Krefeld 12(DE)**
Erfinder: **Rodi, Fritz, Dr.**
**Schwarzer Weg 41**
**D-4130 Moers 1(DE)**

EP 0 354 398 B1

**Beschreibung**

Die vorliegende Erfindung betrifft im wesentlichen aus Eisen bestehende Silicium und Aluminium enthaltende pigmentförmige nadelförmige Legierungspulver, Verfahren zu ihrer Herstellung sowie deren Verwendung.

Im Zuge der Miniaturisierung von elektronischen Bauteilen, Unterhaltungselektronik und Computern werden im verstärkten Maße magnetische Informationsspeicher mit erhöhter Speicherdichte gefordert. Dies ist nur erreichbar durch Erhöhung der Feinteiligkeit und der Koerzitivkraft der zur Herstellung der magnetischen Aufzeichnungsträger eingesetzten Magnetpulver.

Gemäß Ullmanns Encyklopädie der technischen Chemie, Band 16, 4. Auflage, 1979, Seiten 361 bis 367 werden hierfür insbesondere nadelförmige Partikel von $\gamma$-$Fe_2O_3$, Kobaltmodifiziertem $\gamma$-$Fe_2O_3$, $Fe_3O_4$, Co-modifiziertem $Fe_3O_4$, $CrO_2$ und Eisenlegierungen eingesetzt, wobei die mit Eisenoxiden, Co-modifizierten Eisenoxiden und $CrO_2$ erreichbaren Koerzitivkräfte mit technisch sinnvollen Randbedingungen bei ca. 80 kA $m^{-1}$ als obere Grenze begrenzt sind. Eine deutliche Erhöhung der Koerzitivkräfte ist erst mit Eisenlegierungspartikeln möglich.

Hierfür werden somit feinstteilige hochkoerzitive Eisenlegierungen eingesetzt, deren Anforderungsprofil aus der DE-A 3 226 937, Fig. 3 zu entnehmen ist.

Gemäß der DE-A 2 014 500 kann die Herstellung dieser Pulver durch isomorphe Reduktion entsprechender Ausgangsverbindungen erfolgen. Bei diesem Vorgang treten jedoch in erheblichem Maße Schwierigkeiten auf. So kann ausgehend von Goethit eine völlige Zerstörung der gewünschten Nadelform auftreten, die zusätzlich nur zu unzureichenden Koerzitivkräften führt. Weiterhin wird, bedingt durch die hohe Feinteiligkeit, eine starke Versinterung beobachtet, die ebenfalls zu unzureichenden Produkten führt. Ein weiteres Problem beruht in der Pyrophorizität der reduzierten Legierungspulver, die durch zusätzliche Maßnahmen wie oberflächliche Oxidation der Partikel, Nachbehandlung oder Kombinationen hieraus beseitigt werden muß. Dieser Schritt istauch schon deshalb nötig, um die Eigenschaftsschädigung der damit hergestellten magnetischen Aufzeichnungsträger durch Korrosion zu unterdrücken.

Zur Lösung dieses Problems wurden schon verschiedenste Ansätze gemacht. So wird in DE-A 2 553 635 die Ausgangs-Goethitverbindung mit Zinnoxid und Titanoxid umhüllt und hierbei Produkte mit mittleren Nadellängen im Bereich von 0,3 bis 1 $\mu$m erhalten. In der DE-A 2 212 934 wird beschrieben, daß die Vorläuferverbindung mit Co-und/oder Ni-Ionen beschichtet wird. Schließlich wird in der EP-A 056 257 ein Verfahren offenbart, bei dem die Vorläuferverbindung mit Siliciumoxid und Aluminiumoxid behandelt wird.

Dabei werden die jeweils besten Werte bezüglich der Koerzitivkraft aus den mit Nickel dotierten Vorläuferverbindungen erhalten; diese Pigmente sind somit ökologisch nicht unbedenklich.

Aufgabe dieser Erfindung ist es somit, geeignete Legierungspulver zur Verfügung zu stellen, die die beschriebenen Nachteile nicht aufweisen.

Diese Forderungen werden in hervorragender Weise erfüllt durch im wesentlichen aus Eisen bestehende Silicium und Aluminium enthaltende pigmentförmige nadelförmige Legierungspulver, welche 0,3 bis 3 Gew.-% Kobalt und/oder 0,1 bis 5,0 Gew.-% Zinn, jeweils bezogen auf Eisen, enthalten wobei der Silicium-Gehalt von 1,5 bis 3,5 Gew.-% und der Aluminiumgehalt 1 bis 4,5 Gew.-% betragen.

Es wurde gefunden, daß sowohl das $SiO_2/Al_2O_3$-Verhältnis des aufgebrachten Sinterschutzes als auch das zusätzlich aufgebrachte Metalloxid von entscheidendem Einfluß auf die Eigenschaften der Endprodukte waren.

Die gewünschten Produkteigenschaften konnten nur erhalten werden, wenn zusätzlich zu der Nachbehandlung mit Silicium und Aluminium in einem Gewichtsverhältnis $SiO_2/Al_2O_3 \geq 1$ eine weitere Metallverbindung des Kobalts oder Zinns aufgezogen wurde. Der Zusatz von anderen Metallverbindungen führte hierbei nicht zu den gewünschten hohen Koerzitivkräften.

Die erfindungsgemäßen Legierungspulver sind charakterisiert durch eine Anreicherung der Legierungselemente in der Hülle von mehr als 2:1. Die stärkste Anreicherung findet man dabei für das Silicium.

Weiterhin weisen die erfindungsgemäßen Legierungspulver Koerzitivkräfte von mindestens 115 kAm$^{-1}$ auf, womit sie hervorragend für die Herstellung magnetischer Aufzeichnungsmedien geeignet sind. Die Anwesenheit von Chrom als Legierungspigment führt zu einer weiteren Anhebung der Koerzitivkraft. Besonders bevorzugt sind erfindungsgemäße Legierungspulver mit einem Chrom-Gehalt von 0,01 bis 1,0 Gew.-%.

Die Magnetwerte wurden in einem Meßfeld von 397,89 kAm$^{-1}$ an den aufgeriebenen Magnetpulvern bestimmt.

Die Feinheit der erfindungsgemäßen Legierungspulver sollte, charakterisiert nach der spezifischen Oberfläche nach BET, möglichst hohe Werte erreichen und charakterisiert nach der röntgenographischen Kristallitgröße des Fe 110-Reflexes möglichst kleine Werte erreichen, da diese röntgenographische Kristallitgröße in guter Näherung ein Maß für den Durchmesser des Metallkerns der mit Oxiden umhüllten Legierungsnadeln darstellt.

Die spezifischen Oberflächen der Goethitvorläufer und der Endprodukte wurden nach dem Einpunkt-BET-Verfahren (Literatur: S.J. Gregg, K.S.W. Sing: Adsorption, Surface Area and Porosity; London, New York 1967, Kap. 2 und 8 sowie: F.M. Nelson, F.T. Egertsen: Analyt. Chem. 30 (1958), 1987) in fließendem $N_2$/He-Gemisch und integrierender Bestimmung der Konzentrationsänderung im abströmenden Stickstoff erhalten. Die Vorläuferverbindungen wurden nach einstündigem Ausheizen bei 140°C im trockenen Stickstoffstrom, die Endprodukte im Anlieferungszustand gemessen.

Die röntgenographischen Kristallitgrößen der Vorläuferverbindungen und der oberflächlich oxidierten Legierungspulver wurden nach der Methode, wie sie in

H.P. Klug und L.E. Alexander (1974) "X-Ray Diffraction Procedures" Verlag Wiley, New York

beschrieben sind, an den Goethiten sowie an den Endprodukten am 110-Reflex bestimmt.

Bevorzugt beträgt die Kristallitgröße der erfindungsgemäßen Legierungspulver maximal 16 nm des Fe-D 110-Reflexes. Sie weisen bevorzugt eine spezifische Oberfläche nach BET von mindestens 45 m²/g auf.

Gegenstand dieser Erfindung ist auch ein Verfahren zur Herstellung des erfindungsgemäßen Legierungspulvers. Sie werden bevorzugt durch Reduktion entsprechender oxidischer Eisenoxid-Vorläuferverbindungen erhalten, wobei auf dei Vorläuferverbindung die Legierungselemente aufgefällt werden.

Der Zusatz von Chrom bei der Herstellung von Vorläuferverbindungen führte zu einer deutlichen Verbesserung der Reproduzierbarkeit der Vorläuferverbindungen, ohne die sonstigen Eigenschaften zu schädigen.

Im Falle der Chrom-dotierten erfindungsgemäßen Legierungspulver sollte das Chrom als Dotierung in der Vorläuferverbindung vorliegen. Vorläuferverbindungen im Sinne dieser Erfindung sind alle nadelförmigen Eisenoxide bzw. -oxidhydroxide. Besonders gute Ergebnise werden dadurch erhalten, daß die Ausgangsverbindung vor der Reduktion in eine $Fe_3O_{4+x}$-Mischphase mit $0<x<0,5$ umgewandelt wird.

In einer weiteren bevorzugten Ausführungsform des erfindungsgemäßen Verfahrens wird zumindest ein Teil des Kobalts und/oder Zinns und/oder Aluminiums auf der Vorläuferverbindung niedergeschlagen.

Weiterhin kann es vorteilhaft sein, das nach der Reduktion gewonnene erfindungsgemäße Legierungspulver durch Inkontaktbringen mit sauerstoffhaltigen Gasen oberflächlich mit einer Oxidhaut zu überziehen. Hierdurch wird eine gute Passivierung der erfindungsgemäßen Legierungspulver erreicht.

Gegenstand der Erfindung ist auch die Verwendung der erfindungsgemäßen Legierungspulver zur Herstellung von magnetischen Aufzeichnungsträger.

Im folgenden wird die Erfindung beispielhaft erläutert, ohne daß hierin eine Einschränkung zu sehen ist.

Beispiel 1

173 l einer Lösung von 15 kg Eisensulfat und 166,6 g $SnCl_2$ . $2H_2O$ in Wasser wurden bei 18°C mit 150 l einer Lösung, enthaltend 30 kg Natriumhydroxid, unter Rühren zur Reaktion gebracht und bei 25°C mit 0,66 m³/h Luft begast. Nach Oxidation der Eisen II-Verbindungen wurden 5 l einer 263 g $CoSO_4$ x $7H_2O$ enthaltenden Lösung zugetropft und 30 Minuten nachgerührt, die Suspension wurde abfiltriert und der Filterkuchen mit vollentsalztem Wasser gewaschen. Nach Redispergierung des Filterkuchens in Wasser wurde bei 80°C unter Rühren zuerst eine Lösung von Natronwasserglas (= 3 Gew.-% $SiO_2$/FeOOH), anschließend eine Lösung von $Al_2(SO_4)_3$ (= 1,5 Gew.-% $Al_2O_3$/FeOOH) zugesetzt. Nach 30-minütigem Nachrühren wird mit verdünnter Natronlauge ein pH-Wert von 5,5 eingestellt. Nach Filtration, Waschung und Trocknung wird der Filterkuchen gebrochen und unter folgenden Bedingungen in $Fe_3O_4$ umgewandelt:

30 Minuten Temperung bei 650°C unter Luft

105 Minuten Reduktion mit $H_2$/$H_2O$-Gemisch zu $Fe_3O_4$ bei 400°C

30 Minuten FeO-Einstellung mit $N_2$/Luft bei 80°C auf 20-25 Gew.-% FeO/Einwaage

30 Minuten Nachtemperung unter Stickstoff bei 650°C

600 g des so erhaltenen Materials werden im Wasserstoffstrom bei 425°C in 5 Stunden zum Metall reduziert.

Nach Erkalten wird im Stickstoff/Luft-Strom bei ansteigendem Luftanteil die Oberfläche der Partikel oxidiert. Das so erhaltene Pulver zeigte folgende Eigenschaften:

| Koerzitivkraft | : 122,5 kAm$^{-1}$ |
|---|---|
| Br/Bs | : 0,505 |
| Stopfdichte im Magnetrohr | : 0,61 g/ml |
| BET | : 58 m$^2$/g |
| $^D$110 | . 12,5 nm |

Beispiel 2

In einem 100 m$^3$ fassenden Rührbehälter wurden bei 17,9°C 51,5 m$^3$ einer 7750 kg Natronlauge enthaltenden Lösung vorgelegt und unter Rühren innerhalb von 37 Minuten 49,2 m$^3$ einer 4550 kg FeSO$_4$ enthaltenden Lösung von 18,8°C zugepumpt. Nach Beendigung des Zupumpens wurde die Suspension unter Rühren mit 150 m$^3$/h Luft begast; nach 630 Minuten war die Oxidationsreaktion beendet.

Zu 7 m$^3$ dieser Suspension wurde in 30 Minuten unter Rühren CoSO$_4$-Lösung zugetropft (1 Gew.-% Co/Fe) und 30 Minuten nachgerührt. Nach Filtration, Waschung und Wideranmaischung wurde, wie in Beispiel 1, mit 3 Gew.-% SiO$_2$/FeOOH und 1,5 % Al$_2$O$_3$/FeOOH nachbehandelt. Aufarbeitung, Konvertierung und Metallreduktion wurden, wie in Beispiel 1, durchgeführt. Nach Anoxidation der Oberfläche wurden an dem Pulver folgende Eigenschaften gemessen:

| Koerzitivkraft | : 126,3 kAm$^{-1}$ |
|---|---|
| Br/Bs | : 0,55 |
| Stopfdichte im Magnetrohr | : 0,54 g/ml |
| BET | : 63 m$^2$/g |
| $^D$110 | . 13 nm |

Beispiel 3

In einem mit Scheibenrührer und Kühlmantel ausgestatteten Rührbehälter wurden bei 18°C 150 l einer 25 kg NaOH enthaltenden Lösung vorgelegt und unter Rühren und Inertisierung 173 l einer Lösung von 15 kg FeSO$_4$ und 158,77 g KCr(SO$_4$) . 12H$_2$O in 30 Minuten zugepumpt, anschließend wurde bei 25°C mit 1,5 m$^3$/h Luft oxidiert. Nach Beendigung der Oxidationsreaktion wurden 5 l einer CoSO$_4$-Lösung (2 Gew.-% Co/Fe) zugetropft und 30 Minuten nachgerührt.

Nach einer Nachbehandlung mit 3 % SiO$_2$/FeOOH und 1,5 % Al$_2$O$_3$/FeOOH erfolgt die Aufarbeitung zum anoxidierten Metallpulver wie in Beispiel 1 beschrieben.

Es ergaben sich folgende Endprodukteigenschaften:

| Koerzitivkraft | : 129,9 kAm$^{-1}$ |
|---|---|
| Br/Bs | : 0,507 |
| Stopfdichte im Magentrohr | : 0,594 g/ml |
| BET | : 62 m$^2$/g |
| $^D$110 | . 14 nm |

Beispiel 4

In einem mit Scheibenrührer und Kühlmantel ausgestatteten Rührbehälter wurden 4 m$^3$ einer 840 kg NaOH enthaltenden Lösung bei 20°C vorgelegt und unter Kühlung in 23 Minuten 3 m$^3$ einer 546 kg FeSO$_4$ enthaltenden Lösung (aus technischem Eisensulfatheptahydrat aus Beizereien und geklärtem Flußwasser hergestellt), der 0,3 Gew.-% Cr/Fe in Form von KCr(SO$_4$)$_2$ . 12H$_2$O und 1 Gew.-% Co/Fe in Form von CoSO$_4$ . 7H$_2$O zugeschlagen wurden, unter Rühren und Inertisierung zugepumpt. Nach Beendigung des Zupumpens wurde bei 25°C mit 30 m$^3$/h Luft begast.

Nach Beendigung der Oxidationsreaktion wird das Material abfiltriert und gewaschen. Nach Wideranmaischen erfolgt die Nachbehandlung bei 80°C mit:

1 Gew.-% Sn (als SnCl$_2$-Lösung eingesetzt)

4

3 Gew.-% $SiO_2$ (als Natronwasserglaslösung eingesetzt)

und 0,5 Gew.-% $Al_2O_3$ (als $Al_2(SO_4)_3$-Lösung eingesetzt)

jeweils bezogen auf die eingesetzte $\alpha$-FeOOH-Menge und abschließende pH-Einstellung auf den Wert 5.

Die weitere Aufarbeitung zum anoxidierten Metallpulver erfolgte wie in Beispiel 1 beschrieben; das Endprodukt ist wie folgt charakterisiert:

| | |
|---|---|
| Koerzitivkraft | : 128,7 $kAm^{-1}$ |
| Br/Bs | : 0,523 |
| Stopfdichte im Magnetrohr | : 0,597 g/ml |
| BET | : 53 $m^2$/g |
| $^D110$ | : 15,5 nm |

Vergleichsbeispiel 1

Die Vorläuferverbindung von Beispiel 4 wird bei 80°C mit

2 Gew.-% Sn/FeOOH

1 Gew.-% $SiO_2$/FeOOH

3 Gew.-% $Al_2O_3$/FeOOH

nachbehandelt und anschließend ein pH-wert von 5 mit Natronlauge eingestellt. Die Aufarbeitung zum anoxidierten Metallpulver erfolgte wie in Beispiel 1 beschrieben.

Am Metallpulver wurden folgende Eingenschaften bestimmt:

| | |
|---|---|
| Koerzitivkraft | : 91 $kAm^{-1}$ |
| Br/Bs | : 0,418 |
| Stopfdichte im Magnetrohr | : 0,885 g/ml |
| BET | : 48 $m^2$/g |
| $^D110$ | . 16,5 nm |

Vergleichsbeispiel 2

Die $\alpha$-FeOOH-Vorläuferverbindung aus Beispiel 4 wurde mit

2 Gew.-% Sn/FeOOH und 5 Gew.-% $Al_2O_3$

nachbehandelt und wie in Beispiel 1 aufgearbeitet. Am Endprodukt wurden folgende Werte ermittelt:

| | |
|---|---|
| Koerzitivkraft | : 69,9 $kAm^{-1}$ |
| Br/Bs | : 0,426 |
| Stopfdichte im Magnetrohr | : 0,79 g/ml |
| BET | : 45 $m^2$/g |
| $^D110$ | . 17 nm |

Vergleichsbeispiel 3

In einem mit Scheibenrührer ausgestatteten Rührbehälter wurden bei Raumtemperatur unter Inertisierung 200 Liter Natronlaugelösung, enthaltend 52 kg NaOH, und 150 l einer Lösung aus Eisensulfatheptahydrat und Zinn II-chlorid, enthaltend:

27,3 kg $FeSO_4$ und

190 g $SnCl_2 . 2H_2O$

gemischt und anschließend bie 25°C mit 2 $m^3$/h Luft begast. Nach beendeter Oxidationsreaktion wurde der Feststoff abfiltriert und in Wasser erneut angemaischt. Bei 80°C erfolgte eine Nachbehandlung mit

3 Gew.-% $SiO_2$/Feststoff als Wasserglaslösung mit

360 g/l $SiO_2$-Gehalt eingesetzt

und

0,5 Gew.-% $Al_2O_3$/Feststoff als Aluminiumsulfatlösung eingesetzt.

Schließlich wurde ein pH-Wert von 5,0 mit verdünnter Schwefelsäure eingestellt.

Nach Filtration und Waschung wurde der nachbehandelte Goethit, wie in Beispiel 1 beschrieben, zum anoxidierten Metallpigment aufgearbeitet.

| Koerzitivkraft | : 112,4 $kAm^{-1}$ |
|---|---|
| Br/Bs | : 0,456 |
| Stopfdichte im Magnetrohr | : 0,527 g/ml |
| BET | : 37 $m^2$/g |
| $^D$110 | . 18 nm |

Vergleichsbeispiel 4

3475 l einer Lösung von 469 kg NaOH in Wasser bei Temperatur von 14°C werden unter Inertisierung in 39 Minuten mit 2044 Liter einer Eisen II-sulfat-Lösung, enthaltend 404,7 kg $FeSO_4$, gemischt und anschließend mit 150 $m^3$/h Luft begast. Nach Oxidation des $Fe^{2+}$ wird der gebildete Goethit abfiltriert und gewaschen. Nach Redispergierung erfolgt bei 80°C die Auffällung von

1 Gew.-% Co/Feststoff und

4 Gew.-% $SiO_2$/Feststoff

Nach Filtration und Waschung wird, wie in Beispiel 1 beschrieben zum anoxidierten Fe-Pigment aufgearbeitet:

| Koerzitivkraft | : 113 $kAm^{-1}$ |
|---|---|
| Br/Bs | : 0,51 |
| Stopfdichte im Magentrohr | : 0,667 g/ml |
| BET | : 42 $m^2$/g |
| $^D$110 | . 16 nm |

In Tabelle 1 sind als Charakterisierung der Ausgangsgoethite deren spezifische Oberflächen sowie röntgenographische Kristallitgrößen aufgeführt.

In Tabelle 2 sind Abtestergebnisse der Metallpulver nach Einarbeitung in Magnetbänder aufgeführt. Es wurde in allen Fällen die gleiche Bindemittelgrundrezeptur angewandt, nur die Zusatzmengen an Dispergiermitteln wurden der jeweiligen Feinteiligkeit der Pigmente angepaßt. Die Magnetostatik der Bänder wurde wiederum in einem Meßfeld von 397,89 $kAm^{-1}$ gemessen:

a) der Br/Bs-Wert ist der Quotient:

$$\frac{\textbf{remanenten Bandfluß}}{\textbf{Sättigungsbandfluß}}$$

b) der OR-Wert ist der Quotient:

$$\frac{\textbf{Magnetisierung längs der Bandrichtung}}{\textbf{Magnetisierung quer zur Bandrichtung}}$$

c) der (1-s*)-Wert wird als Maß für die Koerzitivkraftverteilung nach der Methode von Williams und Comstock bestimmt.

6

Tabelle 1

| Charakterisierung der Ausgangsverbindungen | | |
|---|---|---|
| Beispiel | $S_{BET}$ [m²/g] | $D_{110}$ [A/nm] |
| 1 | 88 | 75/7,5 |
| 2 | 77 | 90/9,0 |
| 3 | 89 | 85/8,5 |
| 4 | 72 | 85/8,5 |
| Vergleichsbeispiele | | |
| 1 | 72 | 85/8,5 |
| 2 | 72 | 85/8,5 |
| 3 | 81 | 95/9,5 |
| 4 | 73 | 95/9,5 |

<u>T a b e l l e  2</u>

<u>Magnetbänder aus den Pulverproben</u>

| Probe | Koerzitivkraft [kAm$^{-1}$] | Br/Bs | OR | 1-s* |
|---|---|---|---|---|
| Beispiel 1 | 120,2 | 0,88 | 3,02 | 0,28 |
| Beispiel 4 | 121,0 | 0,87 | 2,77 | 0,28 |
| Vergleichsbeisp. 3 | 113,3 | 0,81 | 2,19 | 0,29 |
| Vergleichsbeisp. 4 | 111,2 | 0,76 | 1,52 | 0,37 |

**Patentansprüche**

1. Im wesentlichen aus Eisen bestehende Silicium und Aluminium enthaltende pigmentförmige nadelförmige Legierungspulver, dadurch gekennzeichnet, daß sie 0,3 bis 3 Gew.-% Kobalt und/oder 0,1 bis 0,5

8

Gew.-% Zinn, jeweils bezogen auf Eisen, enthalten, der Silicium-Gehalt 1,5 bis 3,5 Gew.-% und der Aluminium-Gehalt 1 bis 4,5 Gew.-% betragen.

2. Legierungspulver gemäß Anspruch 1, dadurch gekennzeichnet, daß sie einen Chrom-Gehalt von 0,01 bis 1,0 Gew.-% aufweisen.

3. Verfahren zur Herstellung der Legierungspulver gemäß einem oder mehreren der Ansprüche 1 oder 2 durch Reduktion entsprechender oxidischer Eisenoxid-Vorläuferverbindungen, dadurch gekennzeichnet, daß auf die Vorläuferverbindung die Legierungselemente aufgefällt werden.

4. Verfahren gemäß Anspruch 3, dadurch gekennzeichnet, daß Chrom als Dotierung in der Vorläuferverbindung vorliegt.

5. Verfahren gemäß einem der Ansprüche 3 oder 4, dadurch gekennzeichnet, daß zumindest ein Teil des Kobalts und/oder Zinns und/oder Aluminium auf der Vorläuferverbindung niedergeschlagen wird.

6. Verfahren gemäß einem oder mehreren der Ansprüche 3 bis 5, dadurch gekennzeichnet, daß die Ausgangsverbindung vor der Reduktion in eine $Fe_3O_{4+x}$-Mischphase mit $0 < x < 0,5$ umgewandelt wird.

7. Verfahren gemäß einem oder mehreren der Ansprüche 3 bis 5, dadurch gekennzeichnet, daß das nach der Reduktion gewonnene Legierungspulver durch in Kontakt bringen mit sauerstoffhaltigen Gasen oberflächlich mit einer Oxidhaut überzogen wird.

8. Verwendung der Legierungspulver gemäß Anspruch 1 oder 2 zur Herstellung von magnetischen Aufzeichnungsträgern.

## Claims

1. A pigmenting, needle-shaped alloyed powder essentially consisting of iron which contains silicon and aluminium, characterised in that it contains 0.3 to 3 wt.% of cobalt and/or 0.1 to 0.5 wt.% of tin, each being with reference to iron, the silicon content is 1.5 to 3.5 wt.% and the aluminium content is 1 to 4.5 wt.%.

2. An alloyed powder according to Claim 1, characterised in that it has a chromium content of 0.01 to 1.0 wt.%.

3. A process for preparing the alloyed powder according to one or more of Claims 1 or 2 by reducing the corresponding oxidic iron oxide precursor compounds, characterised in that the alloying elements are applied to the precursor compound.

4. A process according to Claim 3, characterised in that chromium is present as a dopant in the precursor compound.

5. A process according to one of Claims 3 or 4, characterised in that at least some of the cobalt and/or tin and/or aluminium is precipitated onto the precursor compound.

6. A process according to one or more of Claims 3 to 5, characterised in that the starting compound is converted into a $Fe_3O_{4+x}$ mixed phase where $0 < x < 0.5$, before reduction.

7. A process according to one or more of Claims 3 to 5, characterised in that the surface of the alloyed powder obtained after reduction is coated with an oxide skin by making contact with oxygen-containing gases.

8. Use of the alloyed powder according to Claim 1 or 2 to prepare magnetic recording media.

9

**Revendications**

1. Poudres d'alliage aciculaires sous forme de pigments, principalement constituées de fer et contenant du silicium et de l'aluminium, caractérisées en ce qu'elles contiennent 0,3 à 3 % en poids de cobalt et/ou 0,1 à 0,5 % en poids d'étain, dans chaque cas par rapport au fer, la teneur en silicium est de 1,5 à 3,5 % en poids et la teneur en aluminium est de 1 à 4,5 % en poids.

2. Poudres d'alliage suivant la revendication 1, caractérisées en ce qu'elles présentent une teneur en chrome de 0,01 à 1,0 % en poids.

3. Procédé de fabrication des poudres d'alliage suivant une ou plusieurs des revendications 1 et 2, par réduction de composés progéniteurs correspondants du type d'oxydes, contenant de l'oxyde de fer, caractérisé en ce que les éléments d'alliage sont précipités sur le composé progéniteur.

4. Procédé suivant la revendication 3, caractérisé en ce que le chrome est présent comme élément dopant dans le composé progéniteur.

5. Procédé suivant l'une des revendications 3 et 4, caractérisé en ce qu'une partie au moins du cobalt et/ou de l'étain et/ou de l'aluminium est précipitée sur le composé progéniteur.

6. Procédé suivant une ou plusieurs des revendications 3 à 5, caractérisé en ce que le composé de départ est transformé avant la réduction en une phase mixte $Fe_3O_{4+x}$ dans laquelle x va d'une valeur supérieure à 0 à une valeur inférieure à 0,5.

7. Procédé suivant une ou plusieurs des revendications 3 à 5, caractérisé en ce que la poudre d'alliage obtenue après la réduction est revêtue en surface d'une pellicule d'oxyde par mise en contact avec des gaz contenant de l'oxygène.

8. Utilisation des poudres d'alliage suivant la revendication 1 ou 2 pour la fabrication de supports d'enregistrement magnétiques.